(19) Europäisches Patentamt

European Patent Office

Office européen des brevets

(11) Publication number: **0 463 674 A2**

## EUROPEAN PATENT APPLICATION

(21) Application number: **91201484.2**

(22) Date of filing: **14.06.91**

(51) Int. Cl.5: **C22B 3/24**, C01B 25/238

(30) Priority: **22.06.90 IT 2074390**

(43) Date of publication of application:
**02.01.92 Bulletin 92/01**

(84) Designated Contracting States:
**AT BE CH DE DK ES FR GB GR LI LU NL SE**

(71) Applicant: ENICHEM AGRICOLTURA S.p.A.
Via Ruggero Settimo 55
I-90139 Palermo(IT)

Applicant: OFFICE TOGOLAIS DES
PHOSPHATES
B.P.379
Lome-Togo(TG)

(72) Inventor: Anania, Guido
Viale Cortemaggiore 11
I-93012 Gela-Caltanisetta(IT)
Inventor: Cultrera, Vito
Viale Fontanarossa 2
I-93012 Gela-Caltanisetta(IT)
Inventor: Blanca, Domenico
Via Concezione 70
I-94019 Valguarnera-Enna(IT)

(74) Representative: Roggero, Sergio et al
Ing. Barzanò & Zanardo Milano S.p.A. Via
Borgonuovo 10
I-20121 Milano(IT)

(54) **Process for removing cadmium from phosphoric acid streams.**

(57) Cadmium is removed from phosphoric acid streams containing it by a process comprising initially treating the stream concerned with halide ions and metallic iron, followed by absorbing the resultant phosphoric solution on adsorption resin not of ion exchange type.

This invention relates to an improved process for removing cadmium from phosphoric acid streams originating from sulphuric or nitric digestion of phosphatic rocks, the process comprising bringing said stream into contact with a non-ion exchange adsorption resin of crosslinked polystyrene or formophenolic type.

Cadmium is known to be contained in phosphorites in a quantity varying between 2 and 100 ppm according to the place of origin of the phosphate rocks. Most of this element passes into the phosphoric solution during the phosphoric acid production process, whereas a small fraction remains in the chalk sent to dumps and is hence lost to the final product.

The cadmium present in phosphoric acid is found in fertilizers in a water-soluble form in a quantity strictly related to the percentage of $P_2O_5$ present in the various formulations. It is therefore apparent that the removal of cadmium from phosphoric acid solutions is undoubtedly a problem of prime importance.

In this respect, the use of sometimes huge quantities of phosphate fertilizers in agriculture can result in a considerable accumulation of this metal in the soil, representing a high risk to human health via plants from which it enters into food.

Many methods have been proposed over the course of time for reducing the cadmium content, for example based on pretreating the initial phosphatic rocks or on complicated methods of predigesting them, although most of these methods involve treating the phosphoric solutions.

Nearly all processes for removing cadmium from phosphoric solutions containing it use liquid-liquid extraction with selective organic reagents such as high molecular weight amines, thiophosphoric esters or sulphides.

These methods, which generally recover the cadmium from acid of 28-30% $P_2O_5$, suffer from considerable operating difficulties, both because of the small quantities of element to be extracted compared with the acid volumes involved, and because of the complexity of the acid mixture to be treated, due to the presence of organic substances, suspended solids and metal impurities which compete with the cadmium in the extraction operation. In addition these methods cannot be applied to the higher concentrations (40-60% $P_2O_5$) normally used in the fertilizer industry.

Cadmium extraction from relatively more concentrated phosphorus solutions has been proposed in the patent DE 3,327,394, which provides for the addition of halide ions. This should allow a greater extraction rate for the same concentration.

An original cadmium extraction method proposed in JP 88035645 and EP 244021 uses ion exchange resins as the extracting medium.

Thus JP 88035645 describes a general method for extracting the most varied cations, including cadmium, from solutions, even in oxidizing conditions, using a resin of chelating type.

EP 244021 describes a method for the selective extraction of cadmium from phosphoric acid using an ion exchange resin of anionic type, followed by treating the solution with halide ions. The purpose of the halide ion $X^-$ addition is to form $CdX_4$ ions which have a high affinity for the resin, which retains them very strongly.

The process is conducted in a single stage, no information being given regarding the regeneration of the spent resin and its reuse in the production process, presumably because of the difficulties involved in stripping the cadmium from the resins by normally used eluent solutions (HCl 1N, $H_2SO_4$ etc.).

The operating difficulties mentioned heretofore in relation to the extracting methods of the known art are totally absent in the cadmium removal process of the present invention.

This provides an industrially reproducible process for extracting cadmium from phosphoric acid streams having a concentration of up to 60% expressed as $P_2O_5$, the process consisting basically of bringing the stream concerned into contact with an adsorption resin not of ion exchange type after pretreating it with halide ions and an element in the metal state.

Specifically, the process of the present invention comprises the following basic operations:
- pretreating the phosphoric acid stream with solutions of at least one halide ion and with at least one element in the metal state, preferably iron;
- possibly clarifying the resultant mixture;
- passing the thus treated phosphoric solution over an adsorption resin of crosslinked polystyrene or formophenolic type;
- possibly draining the phosphoric solution;
- eluting the cadmium with water.

With reference to the individual aforesaid operations, the process of the present invention can be further defined as follows:
- the pretreatment is conducted with solutions of alkaline or alkaline-earth metal halides, preferably at ambient temperature, the concentration of said solutions being such that the quantity of halide ions, especially $I^-$ and/or $Br^-$, varies from 100 to 2000 ppm with respect to the acid.

Metallic iron is preferably used, in a quantity of between 200 and 1000 ppm with respect to the acid;
- the subsequent clarification is conducted at the same temperature as the preceding treatment, using methods well known to the expert of the art. Filtration or decantation is preferably used, for this latter it being preferable to use a particular flocculating agent;

- the subsequent treatment with the resin not of ion exchange type is conducted at the same temperature as the preceding operations, even though higher temperatures can be used.

After possible drainage of the phosphoric solution by methods easily executed by the expert of the art, the process of the present invention is terminated by simply eluting the cadmium with water.

EXAMPLE 1

A sample of 6.25 litres of concentrated phosphoric acid originating from a wet process and to which 800 ppm of potassium iodide and 400 ppm of iron had been previously added, followed by decantation, was passed through a glass column (ø 2.5 cm) containing 250 ml of an adsorption resin known as S 861 (Rohm and Haas).

The feed rate to the column was regulated by a peristaltic pump and maintained at 1250 ml/h.

On termination, after draining the phosphoric acid, the resin was eluted with 625 ml of water at a flow rate of 1250 ml/h, to obtain an eluate containing 0.55 g/l of cadmium. After concentration, this solution can be used in the metallurgical, coloured pigment or other industries.

EXAMPLE 2

A sample of 8.75 litres of concentrated phosphoric acid originating from a wet process and to which 700 ppm of potassium iodide and 500 ppm of metallic iron had been previously added, followed by decantation, was passed through a glass column (ø 2.5 cm) containing 250 ml of an adsorption resin known as S 861 (Rohm and Haas).

The feed rate to the column was regulated by a peristaltic pump and maintained at exactly 1250 ml/h.

On termination, after all the acid had been passed through and drained, the resin was eluted with 500 ml of water at a flow rate of 1000 ml/h, to obtain an eluate containing 1.13 g/l of cadmium. After possible concentration, this solution can be used in the metallurgical, coloured pigment or other industries.

**Claims**

1. A process for removing cadmium from phosphoric acid streams containing it, comprising the following basic operations:
   - initially treating the stream concerned with solutions of at least one halide ion in the presence of at least one element in the metal state;
   - passing the resultant phosphoric solution, after possible clarification, over a resin not of ion exchange type.

2. A process for removing cadmium from phosphoric acid streams as claimed in the preceding claim, wherein solutions of alkaline or alkaline-earth metal halides are used for the initial treatment in a concentration such that the quantity of halide ions is between 100 and 2000 ppm with respect to the acid.

3. A process for removing cadmium from phosphoric acid streams as claimed in the preceding claim, characterised in that the halide ion is preferably chosen from $I^-$ and $Br^-$.

4. A process for removing cadmium from phosphoric acid streams as claimed in claim 1, wherein the stream concerned is treated with the halide ions preferably in the presence of metallic iron.

5. A process for removing cadmium from phosphoric acid streams as claimed in the preceding claim, wherein the iron is present in a quantity of between 200 and 1000 ppm with respect to the acid.

6. A process for removing cadmium from phosphoric acid streams as claimed in claim 1, wherein the phosphoric solution resulting from the treatment with the halide ion is passed over a resin not of ion exchange type chosen from crosslinked polystyrene and formophenolic resins.